# EUROPEAN PATENT SPECIFICATION

(11) **EP 4 224 778 B1**
(45) Date of publication and mention of the grant of the patent: **09.12.2026**
(21) Application number: 22382092.9
(22) Date of filing: 03.02.2022
(51) Int. Cl.: H04L 9/00

(54) **METHOD FOR SECURING A MACHINE AGAINST THEFT AND SECURED MACHINE THEREOF**
VERFAHREN ZUM SICHERN EINER MASCHINE GEGEN DIEBSTAHL UND GESICHERTE MASCHINE DAVON
PROCÉDÉ DE SÉCURISATION D'UNE MACHINE CONTRE LE VOL ET MACHINE SÉCURISÉE CORRESPONDANTE

(43) Date of publication of application: 09.08.2023
(73) Proprietor: Siemens Rail Automation S.A.U., 28760 Tres Cantos (Madrid) (ES)
(72) Inventor: PASTOR PEREZ, Victor Manuel, 28770 Colmenar Viejo, Madrid (ES); ROMAN GUERRERO, Maria Riansares, 28035 Madrid (ES); LEZCANO GIMENEZ, Pablo Gabriel, 28016 Madrid (ES); CAMARA FERNANDEZ, Jorge, 28703 Madrid (ES); QUESADA GONZALEZ, Elena, 28039 Madrid (ES)
(74) Representative: Siemens Patent Attorneys

(56) References cited:
- US-A1- 2020 081 699
- US-A1- 2020 267 187
- US-A1- 2021 078 512

## Description

The present invention concerns a method for securing a machine against theft and a secured machine thereof.

Said machine is typically a vehicle (e.g. a car, or a train, or a ship), or any machine comprising spare parts or components (e.g. a robot) that could be separately stolen. For instance, more and more modern cars comprise, as standard equipment, a keyless entry system and push ignition button. Unfortunately, these technologies make it easier for thieves to steal a car. For instance, a scanning device might be used by a thief for acquiring the code emitted by the key of the keyless entry system when a car user opens or closes the car. Said thief can then modify the car Electronic Control Unit (hereafter "ECU") to add a new key, or directly change the ECU with a modified one to control said car.

In this framework, a promising technology is the blockchain technology: it has been developed for transparently recording information in a distributed way, wherein information changes can be tracked in a secure manner. For instance, the blockchain technology has been proposed for ensuring the integrity of hardware components of a vehicle (see US 2020/267187 A1) or for improving vehicle software updates (see US 2020/081699 A1. In particular, US 2021/0078512 A1 proposes to use the blockchain technology for authenticating a transmission of data between ECUs of a same vehicle and for detecting an invalid ECU in said vehicle. However, the currently existing blockchain solutions do not secure the vehicle against theft of one of its ECUs.

An objective of the present invention is to propose a method for securing such machine against theft of one or several of its components and a secured machine thereof.

For achieving said objective, the present invention proposes a method for securing a machine against a theft and a secured machine thereof according to the objects of the independent claims. Other advantages of the invention are presented in the dependent claims.

The machine according to the invention comprises several components, each comprising a central processing unit (CPU) and a memory. For instance, said machine is a transport machine, e.g. a vehicle, and said components are different components of the following non exhaustive list of components: a steering wheel control system, and/or an ignition system, and/or a braking system, and/or an engine system, and/or an ECU, and/or a key system, and/or a traction control system, and/or a transmission control system, and/or a communication system. One or several components of the machine might be human portable components, e.g. a vehicle key, that can be carried by a person when remotely located from the machine and that is for instance configured for remotely interacting with the other components of the machine, for instance only if it is located within a predefined distance from the machine.

The present invention concerns thus a method for securing against theft a machine comprising N components, N ≥ 2, preferentially, N ≥ 3, wherein each component comprises a central processing unit (CPU) and a memory, said method comprising:
a) assigning to each component a univocal serial number, which is for instance stored in the memory of the concerned component;
b) from said N components, creating at least one chain *S^{j}* of components comprising said N components, wherein said components are arranged successively one after another from a first component ${S}_{1}^{j}$ to a last component ${S}_{K}^{j}$*,* occupying each a position ${S}_{i}^{j}$ within said chain. Preferentially, each chain *S^{j}* of components comprises K components, with K≥N, preferentially K=N, wherein each component is present at least once in the chain. According to the present invention, the index j = 1,...,M, enables to identify each created chain, wherein M ≥ 1 is the number of created chains. Each chain is thus a series of said N components connected to one another, wherein said components are interconnected for exchanging data. Preferentially two directly successive components of the chain (i.e. two directly neighboring components of the chain) are configured for exchanging data with one another. As explained above, the position of one of said components within the chain *S^{j}* is identified or specified by ${S}_{i}^{j}$ with i = 1,...,K, each component of the chain being thus characterized by a position ${S}_{i}^{j}$ that it occupies within said chain. In the following, the component occupying the position ${S}_{i}^{j}$ might be also simply called "the component ${S}_{i}^{j} "$, while ${S}_{i}^{j}$ formally corresponds to the i^{th} position in the chain *S^{j}* that might be occupied by one of said N components. The successive positions ${S}_{i}^{j}$ of the components define thus the order according to which said components are arranged within said chain *S^{j}*, the first and the last component of the chain occupying respectively said positions ${S}_{1}^{j}$ and ${S}_{K}^{j}$*.* According to the present invention, each of the N components occupies at least one position within the chain, each position within said chain being occupied by a single component, and the chain comprising at least N components. Preferentially, if M>1, then ${S}_{1}^{j} \neq {S}_{1}^{p}$ and ${S}_{K}^{j} \neq {S}_{K}^{p} ∀ j$*, p* ∈ {1, ... ,*M*} with p ≠ j, i.e. the first and respectively last component of one of the created chains *S^{j}* are different from the first and respectively last component of another of said created chains whichever created chains are considered. According to the present invention, the component ${S}_{k}^{j}$ (i.e. the component at the k^{th} position in chain *S^{j}*) is preferentially connected to the component ${S}_{k + 1}^{j}$ (i.e. to the component at the k+1^{th} position in said chain *S^{j}*), and optionally only to the latter, for exchanging data with the latter, with in this case k = 1,...,K-1. Preferentially, data can be transmitted within each chain, from one component to another component, e.g. from the first component to the last component, and vice versa, using successive transmission between directly neighboring components. The chain, or more precisely the order of the components within the chain, preferentially defines the way that will be followed by information or data when successively transmitted from one component of the chain to another one, starting with a transmission from the first component of the chain and ending with a transmission to the last component of said chain. In other words, the chain could be defined as a chain of communication. Preferentially, a same component cannot occupy two successive positions;
c) for each created chain *S^{j}*, using a hash function, preferentially a cryptographic hash function, for calculating successively a hash value ${H}_{i}^{j}$*,* i=1,...,K, for each component ${S}_{i}^{j}$ of the chain, said calculation starting with the calculation of a hash value ${H}_{1}^{j}$ for the first component of the chain and ending with the calculation of the hash value ${H}_{K}^{j}$ for the last component of said chain, wherein the hash value ${H}_{1}^{j}$ is calculated, preferentially by the CPU of said first component and/or by the CPU of a or each directly neighboring component in said chain and/or by the CPUs of all other components of said chain, in function of at least the univocal serial number of said first component and optionally another data D_1, wherein each hash value ${H}_{k + 1}^{j}$*,* for k= 1,...,K-1, is successively calculated (i.e. by successive incrementation of k, or in other words, iteratively), preferentially by the CPU of the component occupying the position ${S}_{k + 1}^{j}$ and/or by the CPU of a or each directly neighboring component of the component occupying the position ${S}_{k + 1}^{j}$ in said chain and/or by the CPU of all other components of said chain, in function of at least the univocal serial number of the component occupying the position ${S}_{k + 1}^{j}$ and the hash value ${H}_{k}^{j}$ calculated for the previous component in said chain, and optionally another data D_k+1. According to the present invention, the chain defines the order according to which the hash values ${H}_{i}^{j}$ have to be successively calculated, and the input(s) that have to be used for calculating each hash value ${H}_{i}^{j}$ at each successive calculation step;
d) for each created chain *S^{j}*, storing, after each calculation of a hash value ${H}_{i}^{j}$*,* said hash value ${H}_{i}^{j}$ in the memory of the component occupying the position ${S}_{i}^{j}$ and/or in the memory of a or each directly neighboring component of the component occupying the position ${S}_{i}^{j}$ in said chain and/or in the memory of all other components of said chain;
e) at a time T after calculation and registration, for each of said chains, of all hash values ${H}_{i}^{j}$*,* proceeding, for each of said chains, to a recalculation of hash values, wherein said recalculation comprises:
   - for j=1 to M, using said hash function for successively calculating a hash value ${H}_{i}^{j} ′$*,* i=1,...,K, for each of the components of the chain *S^{j}*, said calculation starting with the calculation of a hash value ${H}_{1}^{j} ′$ for the first component of the chain *S^{j}* and ending with the calculation of a hash value ${H}_{K}^{j} ′$ for the last component of said chain *S^{j}*, wherein the hash value ${H}_{1}^{j} ′$ is calculated, notably using the same calculation means as for calculating ${H}_{1}^{j}$*,* i.e. preferentially by the CPU of said first component and/or by the CPU of a or each directly neighboring component in said chain and/or by the CPUs of all other components of said chain, in function of at least the univocal serial number of said first component and optionally said another data D_1, wherein, after calculation of ${H}_{1}^{j} ′$*,* the calculation of each hash value ${H}_{k + 1}^{j} ′$ is successively calculated for k= 1,...,K-1 (i.e. by successive incrementation of k), notably using the same calculation means as for calculating ${H}_{k + 1}^{j}$, i.e. preferentially by the CPU of the component occupying the position ${S}_{k + 1}^{j}$ and/or by the CPU of a or each directly neighboring component of the component occupying the position ${S}_{k + 1}^{j}$ in said chain and/or by the CPUS of all other components of said chain, in function of at least the univocal serial number of the component occupying the position ${S}_{k + 1}^{j}$ and the hash value ${H}_{k}^{j} ′$ calculated for the previous component in said chain (i.e. the component occupying the position ${S}_{k}^{j}$), and optionally said another data D_k+1, and
   - comparing, after each calculation of a hash value ${H}_{i}^{j} ′$*,* the latter to the stored hash value ${H}_{i}^{j}$ (e.g. stored in the memory of component occupying the position ${S}_{i}^{j}$ and/or in the memory of a or each directly neighboring component of said component occupying the position ${S}_{i}^{j}$ in said chain and/or in the memory of all other components of the chain), and automatically putting said component occupying the position ${S}_{i}^{j}$, and preferentially all next components of the chain or all other components of the chain, in an anti-theft state in case of a divergence or difference between the stored hash value ${H}_{i}^{j}$ and the newly calculated hash value ${H}_{i}^{j} ′$*.* Said anti-theft state is configured for preventing theft of the component and/or of other components of the chain. Putting a component in its anti-theft state is for instance shutting down said component or putting it in an inactive state that can only be reactivated by using a manufacturing code. For instance, the method comprises automatically shutting down said component occupying the position ${S}_{i}^{j}$, and preferentially all next components of the chain or all other components of the chain, in case of said divergence or difference between the stored hash value ${H}_{i}^{j}$ and the newly calculated hash value ${H}_{i}^{j} ′$.

The present invention also concerns a machine that is secured against theft according to the previously described concept. Said machine comprising thus:
- N components, N ≥ 2, preferentially, N ≥ 3, wherein each component comprises a central processing unit (CPU), a memory, and a univocal serial number;
   wherein said N components are arranged successively one after another from a first component ${S}_{1}^{j}$ to a last component ${S}_{K}^{j}$ in order to form at least one chain *S^{j}* of components, wherein each component is configured for occupying a position ${S}_{i}^{j}$ within said chain. According to the present invention, at least one chain *S^{j}* of components is defined for the components of said machine, wherein each chain is preferentially stored within one, several or all memories of the components. Each chain *S^{j}* preferentially comprises K components, with K≥N and with j = 1,...,M, M ≥ 1 being the number of created chains. Each chain *S^{j}* comprises notably only components of said machine, that is, if K > N, then at least one component is comprised several times in the chain. According to the present invention, each of the N component is configured for occupying at least one position ${S}_{i}^{j}$ within the chain *S^{j}.* The successive positions ${S}_{i}^{j}$ of the chain defines thus an order according to which said components are arranged within said chain *S^{j}*, each position within said chain being occupied by a single component. Said chain enables to register within the memory of one or several or all components of the machine, how the K components are ordered in each chain from a first component to a last component, wherein said ordering will be used afterwards for a calculation of hash values;
   wherein said components are interconnected for exchanging data. Said data comprising for instance a hash value ${H}_{i}^{j}$ or ${H}_{i}^{j} ′$ or any data that has to be used as input by a CPU for the calculation of ${H}_{i}^{j}$ or ${H}_{i}^{j} ′$ by means of the hash function. Said data might also comprise information about the created chain(s) so that for instance each CPU is aware of at least each component which is a direct neighbor of the component it equips according to the created chain(s). Preferentially, directly successive components in the chain *S^{j}* are configured for exchanging data with one another. In particular, a component occupying a position ${S}_{k}^{j}$ in the chain *S^{j}* is configured for being connected to the component ${S}_{k + 1}^{j}$ for exchanging data with the latter, wherein k = 1,...,K-1;
   wherein the CPU of each component is configured for using a hash function for calculating one or several hash values ${H}_{i}^{j}$;
   wherein, for each chain *S^{j}*, the hash values ${H}_{i}^{j}$ are successively calculated for each component of the considered chain, starting with the calculation of a hash value ${H}_{1}^{j}$ for the first component of the chain and ending with the calculation of a hash value ${H}_{K}^{j}$ for the last component of said chain, wherein the hash value ${H}_{1}^{j}$ is calculated in function of at least the univocal serial number of said first component, wherein each hash value ${H}_{k + 1}^{j}$*,* for k= 1,...,K-1, is successively calculated in function of at least the univocal serial number of the component occupying the position ${S}_{k + 1}^{j}$ and the hash value ${H}_{k}^{j}$ calculated for the previous component in said chain;
   wherein, for each chain *S^{j}*, the CPU having calculated a hash value ${H}_{i}^{j}$ is configured for storing the latter in the memory of at least one of the components of the chain;
   wherein, at a time T after calculation and registration, for each of the chain *S^{j}*, of all hash values ${H}_{i}^{j}$*,* at least one CPU of said components is configured for automatically implementing or launching a recalculation of hash values for each of said chains, wherein said hash function is used for successively calculating a hash value ${H}_{i}^{j} ′$*,* i=1,...,K**,** for each of the components of the chain *S^{j}*, said calculation starting with the calculation of a hash value ${H}_{1}^{j} ′$ for the first component of the chain *S^{j}* and ending with the calculation of a hash value ${H}_{K}^{j} ′$ for the last component of said chain *S^{j}*, wherein the hash value ${H}_{1}^{j} ′$ is calculated in function of at least the univocal serial number of said first component, wherein each hash value ${H}_{k + 1}^{j} ′$*,* for k= 1,...,K-1, is successively calculated in function of at least the univocal serial number of the component occupying the position ${S}_{k + 1}^{j}$ and the hash value ${H}_{k}^{j} ′$ calculated for the component occupying the position ${S}_{k}^{j}$ in said chain, and
   wherein, after each calculation of a hash value ${H}_{i}^{j} ′$*,* at least one CPU is further configured for comparing said hash value ${H}_{i}^{j} ′$ to the stored hash value ${H}_{i}^{j}$*,* and for automatically putting the component occupying the position ${S}_{i}^{j}$ in said anti-theft state (e.g. in its shutdown state) in case of a difference between the stored hash value ${H}_{i}^{j}$ and the newly calculated hash value ${H}_{i}^{j} ′$*.*

In particular, the machine according to the present invention is configured for automatically starting the recalculation of the hash values at each of its starts and/or at each start of one of its components (e.g. as soon as a component CPU is running), and/or periodically according to a predefined period of time. For instance, the calculation and registering of the hash values ${H}_{i}^{j}$ is performed during a first stage, e.g. when manufacturing and/or commissioning the machine, and the recalculation, i.e. the calculation of the hash values ${H}_{i}^{j} ′$ takes place at a second stage, e.g. after said commissioning. For example, the manufacturing of a car may comprise said first stage during which said hash values ${H}_{i}^{j}$ are calculated. Once the car leaves the manufacture, each hash value ${H}_{i}^{j}$ has been stored in at least one of the memories of the car components. Then, at each start of the car, or at each start of one of the components, or periodically, the car launches a recalculation of the hash values. If one of the car components has been changed or replaced, for example for forcing the start of the car, then all other components will shut down. For instance, energizing one of the components may automatically trigger said recalculation.

According to the present invention, and preferentially, the CPU of the component occupying the position ${S}_{i}^{j}$ and/or the CPU of a or each directly neighboring component of the component occupying said position ${S}_{i}^{j}$ in said chain *S^{j}* and/or the CPUs of all other components of said chain, is or are configured for calculating the hash value ${H}_{i}^{j}$ and/or ${H}_{i}^{j} ′$*.* In particular, for this purpose, the components are configured for automatically transmitting the relevant data to the CPU(s) in charge of the calculation of the hash value ${H}_{i}^{j}$ or ${H}_{i}^{j} ′$. Preferentially, only the CPU of the component occupying the position ${S}_{i}^{j}$ is in charge of the calculation of the hash value ${H}_{i}^{j}$ and ${H}_{i}^{j} ′$*.* After calculation of said hash value ${H}_{i}^{j}$ or ${H}_{i}^{j} ′$*,* the CPU of said component occupying the position ${S}_{i}^{j}$ automatically transmits the calculated hash value to the next component. This process of transmission of a hash value by a previous component to a next component reiterates for each calculated hash value until reaching the end of the chain.

According to the present invention, and preferentially, for each chain *S^{j}*, the CPU having calculated the hash value ${H}_{i}^{j}$ is configured for storing the latter in the memory of the component occupying the position ${S}_{i}^{j}$ and/or in the memory of a or each directly neighboring component of the component occupying the position ${S}_{i}^{j}$ and/or in the memory of all other components of said chain. Preferentially, only the CPU of the component occupying the position ${S}_{i}^{j}$ is in charge of and configured for the calculation of the hash value ${H}_{i}^{j}$ and ${H}_{i}^{j} ′$*,* and for storing the hash value ${H}_{i}^{j}$ in the memory of the component it equips.

According to the present invention, and preferentially, said at least one CPU configured for comparing the hash value ${H}_{i}^{j} ′$ to the stored hash value ${H}_{i}^{j}$*,* and for automatically putting said component occupying the position ${S}_{i}^{j}$ in said anti-theft state, e.g. by automatically shutting down said component, in case of said difference or divergence between the stored hash value ${H}_{i}^{j}$ and the newly calculated hash value ${H}_{i}^{j} ′$ is further configured for putting all next components of the chain or all other components of the chain in their respective anti-theft state (e.g. by shutting down all next or all other components) in case of said difference. For instance, said at least one CPU may send a message to the next component, wherein said message is configured for being transmitted from one component to another through the chain according to the successive positions of said components until reaching the last component, and triggers, notably once the last component has received said message, said putting in an anti-theft state, e.g. a shutdown state, of each component having received said message. Preferentially, said at least one CPU configured for comparing the hash value ${H}_{i}^{j} ′$ to the stored hash value ${H}_{i}^{j}$ is further configured for interrupting said recalculation in case of said difference between the stored hash value ${H}_{i}^{j}$ and the newly calculated hash value ${H}_{i}^{j} ′$*.* By this way, said recalculation stops as soon as a divergence is found by a CPU. In such a case, and preferentially, the CPU which found said difference automatically sends said message that triggers all other components of the chain to go in said anti-theft state (e.g. shutdown state). Of course, the anti-theft state of different components might be different.

Preferentially, putting at least one component of the chain in said anti-theft state, e.g. shutting down of at least one of the components of the chain, because of a found difference between the hash value ${H}_{i}^{j}$ and ${H}_{i}^{j} ′$ automatically triggers to go in their respective anti-theft state, e.g. it can trigger the shutting down of all other components.

Preferentially, each univocal serial number is encrypted in the memory or database where it is stored. For instance, another hash function, such as SHA, might be used for encrypting each univocal serial number. Preferentially, each univocal serial number is encrypted with a random number. Alternatively, the univocal serial number might be written in a ROM together with said random number in order to obfuscate it as much as possible. Of course, other known-in-the art techniques might be used for encrypting said univocal serial number.

Further aspects of the present invention will be better understood through the following drawings, wherein like numerals are used for like and corresponding parts:
- Figure 1: schematic representation of a machine according to the invention.
- Figure 2A-2G: non-exhaustive examples of chains according to the invention.
- Figure 3: flowchart of a preferred method according to the invention.

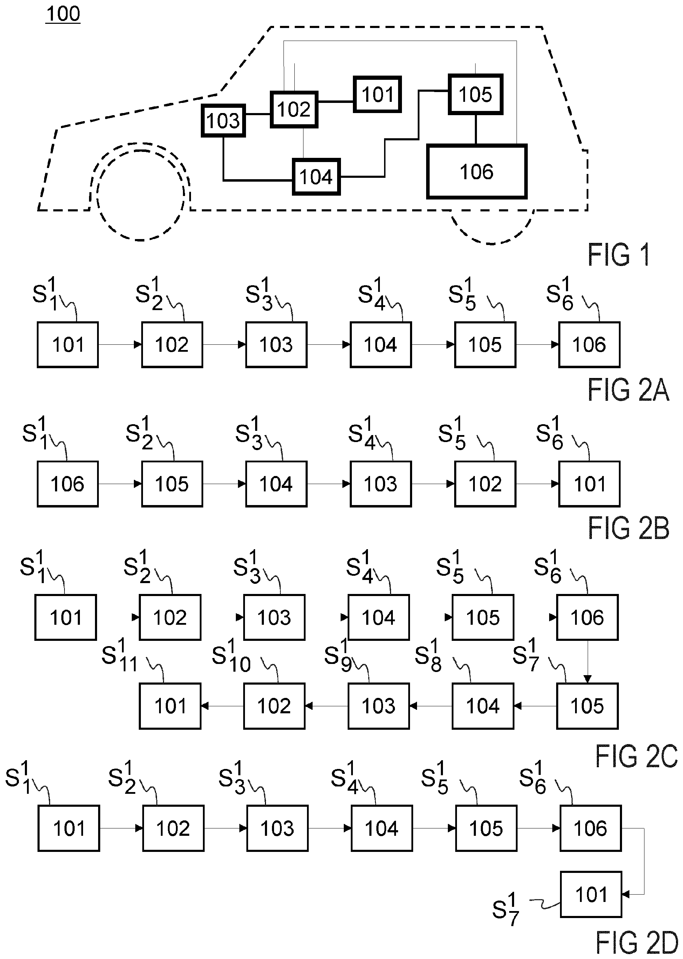

Figure 1 schematically illustrates a machine 100 according to the invention. Said machine 100 is for instance a car. Said machine 100 comprises N components, with N ≥ 2. According to the embodiment presented in Fig. 1, said machine comprises 6 components: for instance a first component 101, a second component 102, a third component 103, a fourth component 104, a fifth component 105 and a sixth component 106. Each component according to the invention 101-106 comprises a CPU and a memory. For instance, the first component is a key system, the second component an ECU, the third component a steering wheel control system, the fourth component an ignition system, the fifth component a braking system, and the sixth component an engine system.

According to the present invention, a univocal serial number is assigned to each component, said univocal serial number being thus different for each component and enabling a univocal identification of the component to which it is assigned. The univocal serial number of a component is preferentially stored in the memory of said component. The components according to the invention might be configured for communicating with a central control system and/or might be configured for communicating directly with each other, wherein the communication with said central control system and/or the communication with each other is preferentially secured physically and/or logically. For this purpose, they can be connected to said central control system and/or each component might be connected to one or two other components, or even to all other components. In other words, said components are interconnected, notably physically interconnected, to each other, either directly or indirectly.

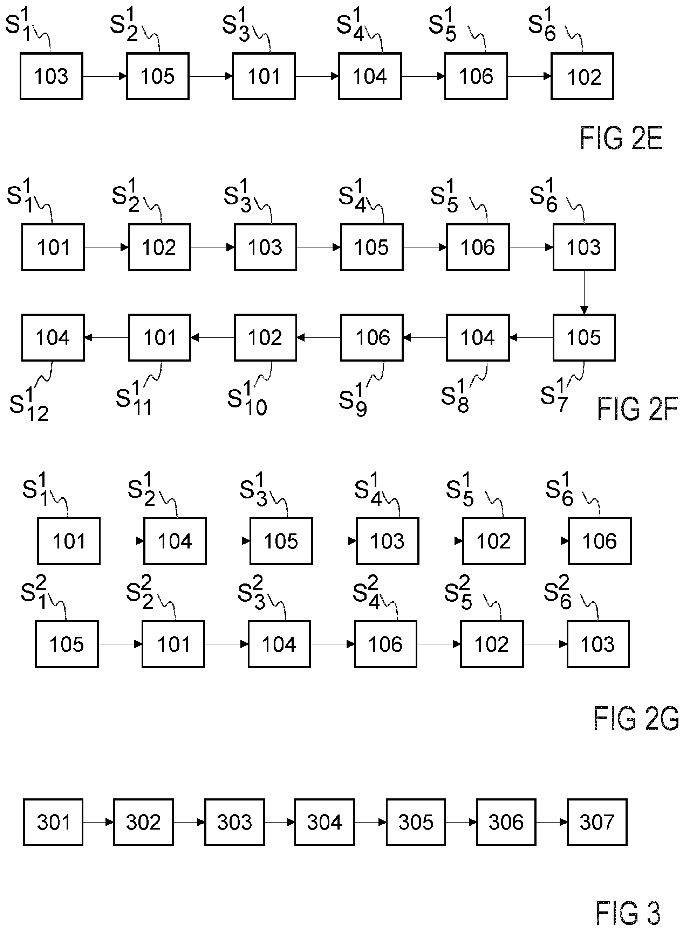

According to the present invention, one or several chains *S^{j}* of components are defined from said N components, with j = 1,...,M, M ≥ 1 being the number of created or defined chains. Each chain defines a succession of said components, wherein two directly successive components are notably configured for communicating with each other for exchanging data. Examples of such chains are presented in Figures 2A-2G, wherein the illustrated chains have been defined or created from the 6 components of the machine 100 of Fig. 1. In particular, Fig. 2A-2F present examples wherein a single chain (M=1), *S¹,* is created, while Fig. 2G present an example wherein two chains (M=2) are created or defined, namely *S*¹ and *S*²*.* According to the present invention, at least one chain is created or defined. Each chain comprises at least the N components of the machine. The arrangement of the components within each chain defines how components will interact and/or communicate, notably among them, for calculating the hash values.

A chain according to the invention may comprise more than N components. Examples are provided with Fig. 2C, 2D, 2F, which comprises more than 6 components. In such cases, one or several components appear several times within the chain, i.e. occupy several positions within the chain. The position of a component within a chain is identified by ${S}_{k}^{j}$: a component occupying a position ${S}_{k}^{j}$ is a component of the chain *S^{j}* occupying the k^{th} position from the first component of the chain. For instance, in Fig. 2A, ${S}_{4}^{1}$ is the fourth position within the chain *S*¹*,* said position being occupied by the fourth component 104. According to Fig. 2B, said fourth position within the chain *S*¹*,* i.e. ${S}_{4}^{1}$, is occupied by the third component 103. Preferentially, two successive positions in a same chain are always occupied by two different components, i.e. the component occupying a position ${S}_{k}^{j}$ is different from the component occupying the position ${S}_{k + 1}^{j}$.

Preferentially, the component occupying the first position in a chain also occupies the last position in said chain, as shown in Fig. 2C and 2D. This ensures that for each component of the chain, a hash value calculated for a previous component is used for calculating the hash value of a next component. Another possibility for ensuring that for each component of the machine, at least one hash value has been calculated using a previously obtained hash value, is to define or create two chains as shown in Fig. 2G, wherein the first and resp. last component of one of the chains is different from the first and resp. last component of the other chain. In the example of Fig. 2G, a hash value for the third component 103 will be calculated in function of the hash value obtained for the fifth component 105 according to the chain *S*¹ and another hash value for said third component 103 will be calculated in function of the hash value obtained for the second component 102 according to the chain *S².* This way of defining a chain improves the protection of the machine against theft.

A preferred embodiment of the method for securing a machine against theft will be now described based on Figure 3. The method comprises the following steps illustrated with respect to the machine 100 of Fig. 1 and the chains of Fig. 2A-2G:
At step 301, each of the N machine components that comprises a CPU and a memory is assigned a univocal serial number. Said univocal serial number might be assigned by an operator, or automatically by a system configured for generating and assigning univocal serial numbers. The univocal serial number of a component is preferentially stored in the memory of said component. Each component of the machine 100 is assigned a different univocal serial number. Preferentially, the univocal serial number is encrypted in said memory where it is stored. In particular, the univocal serial numbers of a machine might be stored in a secured database of the machine manufacturer.

At step 302, at least one component chain *S^{j}* comprising said N components is created or defined. Said chain *S^{j}* might be created or defined by an operator, or automatically by ordering components according to predefined criteria, e.g. according to types of components. For instance, each CPU might comprise said predefined criteria and an access to characteristics of the component it equips, like the component type, and might communicate with the CPUs of the others component for automatically determining an ordering among the components in function of said characteristics.

For each chain *S^{j}* of components according to the invention, and as shown in Fig. 2A-2G, each of the N components occupies at least one position ${S}_{i}^{j}$. Each chain is an arrangement of successive components that defines an order among said components of the machine 100. Optionally, a physical connection of the components might reflect their succession (or order) in the chain of component. For instance, a component occupying a position ${S}_{k}^{j}$ might be at least connected, e.g. physically connected (e.g. with wire or according to a wireless technique), notably directly or indirectly, to a component occupying the position ${S}_{k + 1}^{j}$ for exchanging data with the latter, wherein k = 1,...,K-1. However, as shown in Fig. 1, a component, like the second component 102, might be directly connected to several other components which are then not direct neighbors when considering the chain of components, as illustrated for instance by Fig. 2A. In other words, the chain might be physically implemented within the machine by connecting successive components with each other, and/or might remain virtual by simply virtually ordering said components one after the other. The main aim of the chain is to define an order according to which hash values have to be calculated for said components and which inputs have to be used for calculating said hash values. In particular, said order might be stored in said secured database of the machine manufacturer.

At step 303, a hash function is used for calculating, for each created chain *S^{j}* and successively, a hash value ${H}_{i}^{j}$*,* i = 1,...,K, for each component of the chain. For this purpose, the CPU of each component is configured for using said hash function for calculating one or several hash values ${H}_{i}^{j}$*.* Preferentially, the launching of said calculation of hash values is automatically triggered by the creation or definition of the chain of components. Said calculation starts with the determination of the hash value for the component occupying the first position in the chain. For instance, considering the chain illustrated by Fig. 2D, said calculation will start with the determination of the hash value ${H}_{1}^{1}$ for the first component 101. Said calculation of ${H}_{1}^{1}$ is preferentially performed by the CPU of said first component 101. It could also be performed by one or several other CPUs of the chain. Each CPU might comprise or obey calculation criteria which define which CPU that have to calculate a hash value and for which component. In any case, the hash value ${H}_{1}^{1}$ is calculated in function of at least the univocal serial number of said first component 101, and optionally another data D_1.

After the determination of ${H}_{1}^{1}$, the calculation continues with the determination of the hash value ${H}_{2}^{1}$ for the component occupying the second position within said chain, namely the second component 102 according to the chain of Fig. 2D. Said calculation of ${H}_{2}^{1}$ is preferentially performed by the CPU of said second component 102. However, as explained before, it could also be performed by one or several other CPUs of the chain, depending on or according to said calculation criteria. In any case, the hash value ${H}_{2}^{1}$ is calculated in function of at least the univocal serial number of said second component 102, the hash value ${H}_{1}^{1}$, and optionally another data D_2. Then, said calculation process described for the component occupying the second position in the chain repeats successively for the components occupying each next position in the chain until reaching the last position of the chain occupied, in the present case, by the first component 101. According to the preferred chain illustrated by Fig. 2D, two hash values, namely ${H}_{1}^{1}$ and ${H}_{7}^{1}$*,* will be determined for the first component, wherein ${H}_{7}^{1}$ is calculated in function of the hash value ${H}_{6}^{1}$.

Preferentially, it is the CPU of each component that is in charge of calculating the hash value for the component it equips. Then, said CPU transmits the calculated hash value to the CPU of the next component in said chain. The process repeats until the hash value of the component occupying the penultimate position is transmitted by the CPU of said component occupying the penultimate position to the CPU of the last component of the chain. After the calculation of the last hash value, the calculation preferentially automatically stops.

At step 304, for each chain *S^{j}*, the CPU having calculated a hash value ${H}_{i}^{j}$ is configured for storing the latter in the memory of at least one of the components of the chain. Preferentially, the CPU stores the calculated hash value ${H}_{i}^{j}$ in the memory of the component it equips. Of course, other embodiments might be possible, wherein a calculated hash value ${H}_{i}^{j}$ is stored in the memory of one or several components, or is distributed to all memories or some of said memories. As for the calculation process, registration rules or criteria might be defined and/or stored in a memory of one or several or all components for defining in which memory(or memories) the calculated hash values have to be registered.

At the end of step 304, each component of the machine 100 is thus characterized by a hash value that is stored preferentially in the memory of the concerned component. Said hash values are the original or "nominal" hash values, determined for instance when building or commissioning the machine.

At step 305, for example at a time T after calculation and registration, for each of said chains *S^{j}*, of said hash values ${H}_{i}^{j}$*,* the method comprises a recalculation, for each of said chains, of hash values ${H}_{i}^{j} ′$*.* Said time T might correspond to an activation of at least one of the components of the machine, or to the end of a predefined time period, or to a start of the machine, etc.

For this recalculation, the CPUs are configured for recalculating hash values for each component of each chain. In particular, said CPUs might be configured for calculating hash values for the components of several chains successively or simultaneously (i.e. the hash values of two chains are simultaneously calculated). For the calculation of the hash values ${H}_{i}^{j} ′$*,* the CPUs use of course the same hash function as it has been used for the calculation of said "original" hash values ${H}_{i}^{j}$*.* As for the calculation of the hash values ${H}_{i}^{j}$*,* the recalculation starts with the calculation of the hash value ${H}_{1}^{j} ′$ for the component occupying the first position in the chain.

Considering again the chain illustrated by Fig. 2D, said recalculation will start with the determination of the hash value ${H}_{1}^{1} ′$ for the first component 101. Said calculation of ${H}_{1}^{1} ′$ is preferentially performed by the CPU of said first component 101. As explained before, it could also be performed by one or several other CPUs of the chain depending on said calculation criteria. The hash value ${H}_{1}^{1} ′$ is calculated in function of at least the univocal serial number of said first component 101, and optionally said another data D_1 if it was used for calculating ${H}_{1}^{1}$.

At step 306, at least one CPU is configured for comparing said hash value ${H}_{1}^{1} ′$ to the stored hash value ${H}_{1}^{1}$. Preferentially, the CPU having calculated ${H}_{1}^{1} ′$ is the same as the CPU having calculated ${H}_{1}^{1}$ and is also the one that compares ${H}_{1}^{1} ′$ to ${H}_{1}^{1}$*.* Of course, the skilled person might implement other process where said comparison is performed by the CPU of one or several other components of the machine.

At step 307, the CPU(s) having performed said comparison is configured for automatically putting the component occupying the position ${S}_{1}^{1}$, i.e. said first component 101, in an anti-theft state, e.g. its shutdown state (by automatically shutting it down), in case of a difference between the stored hash value ${H}_{1}^{1}$ and the newly calculated hash value ${H}_{1}^{1} ′$**.**

Said recalculation then continues, notably as long as a stored hash value is identical to a newly calculated hash value, until calculating the hash value ${H}_{K}^{j} ′$ for the component occupying the last position in the considered chain.

Therefore, after the determination of ${H}_{1}^{1} ′$, the calculation continues with the determination of the hash value ${H}_{2}^{1} ′$ for the component occupying the second position within said chain, namely the second component 102 according to the chain of Fig. 2D. Again, said calculation of ${H}_{2}^{1} ′$ is preferentially performed by the CPU of said second component 102. However, as explained before, it could also be performed by one or several other CPUs of the chain, depending on or according to said calculation criteria. In any case, the hash value ${H}_{2}^{1} ′$ is calculated in function of at least the univocal serial number of said second component 102, the hash value ${H}_{1}^{1} ′$, and optionally said another data D_2 if it was used for calculating ${H}_{2}^{1}$.

Then, step 306 and 307 are repeated for the hash value ${H}_{2}^{1} ′$: at least one CPU, preferentially the one having calculated ${H}_{2}^{1} ′$ and ${H}_{2}^{1}$*,* is configured for comparing said hash value ${H}_{2}^{1} ′$ to the stored hash value ${H}_{2}^{1}$ and for automatically putting the component occupying the position ${S}_{2}^{1}$, i.e. said second component 102, in its anti-theft state (e.g. shutdown state, by automatically shutting it down) in case of a difference between the stored hash value ${H}_{2}^{1}$ and the newly calculated hash value ${H}_{2}^{1} ′$.

Then, said calculation process described for the hash value ${H}_{2}^{1} ′$ performed for the component occupying the second position in the chain repeats successively for the components occupying each next position in the chain until reaching the last position of the chain occupied, in the present case, by the first component 101.

As described above, if the newly hash value of any component in the chain differs from the originally calculated hash value, then the component for which said new hash value was calculated will automatically change its state for said anti-theft state, for instance, it will automatically shut down, and all next components in the chain, if any, will also change their respective state for their respective anti-theft state, for instance, they will also automatically shut down, since their respective newly calculated hash value will automatically differ from their respective original hash value. Indeed, the hash function can only generate a same output if same inputs are provided, which is not anymore the case once a newly hash value differs from an original hash value.

Preferentially, as soon as a component has to be put in said anti-theft state, e.g. shut down, because of a newly calculated hash value differing from an original hash value, then all other components are automatically put in their respective anti-theft state, e.g. also shut down. This avoids in particular having some components active (e.g. the components whose position is before the component for which a different hash value has been obtained) and some other components in their anti-theft state, e.g. shut down (e.g. said component for which said different hash value has been obtained and all following components according to the chain). For instance, as soon as a newly calculated hash value differs from an original hash value, then a message is sent by the CPU having performed the comparison to the CPU of all other components, wherein said message is configured for triggering a shutdown of the component they respectively equip. Alternatively, said CPU having performed the comparison may automatically switch off the power source of the component it equips and optionally the power source of all other components of the chain.

Preferentially, if during said recalculation, a newly calculated hash value ${H}_{k}^{j} ′$, with k = 1,...,K-1, is not received by, or cannot be acquired by, or is not transmitted to the component at the position ${S}_{k + 1}^{j}$, then said component is automatically put in said anti-theft state, e.g. shut down, and said message configured, upon reception, for putting each component that receives said message in said anti-theft state (e.g. configured for automatically shutting down the component receiving said message), is forwarded to all other components of the chain.

To summarize, the present invention provides a new method for securing a machine against theft of one or several of its components and a secured machine thereof that are based on an iterative calculation of hash values for components of said machine, wherein said components are arranged according to a chain of components, wherein a hash value previously calculated for a component in said chain is used for calculating the hash value of a next component. Advantageously, this concept makes it very difficult to hack one of the components of said machine, for reselling for instance separately a component of the machine, since it will require knowing the hash values of all other components of the machine, or hacking each component. A component of the chain cannot be easily replaced by unauthorized person or sold separately. In particular, replacing or modifying one component of the chain may trigger said component and/or all other components to be put in an anti-theft state, which is preferentially a shutdown state. The present invention discloses thus a concept that highly contribute to securing machines against theft.

## Claims

1. Method for securing against theft a machine (100) comprising N components (101-106), N ≥ 2, wherein each component comprises a central processing unit - hereafter CPU - and a memory, wherein said components are interconnected for exchanging data, said method comprising:
- assigning (301) to each component a univocal serial number;
- from said N components, creating (302) at least one chain *S^{j}* of components comprising said N components (101-106), wherein said components are arranged successively one after another from a first component ${S}_{1}^{j}$ to a last component ${S}_{K}^{j}$*,* occupying each a position ${S}_{i}^{j}$ within said chain;
- for each created chain *S^{j}*, using (303) a hash function for calculating successively a hash value ${H}_{i}^{j}$*,* i=1,...,K, for each component ${S}_{i}^{j}$ of the chain, said calculation starting with the calculation of a hash value ${H}_{1}^{j}$ for the first component of the chain and ending with the calculation of a hash value ${H}_{K}^{j}$ for the last component of said chain, wherein the hash value ${H}_{1}^{j}$ is calculated in function of at least the univocal serial number of said first component, and wherein each hash value ${H}_{k + 1}^{j}$*,* for k= 1,...,K-1, is successively calculated in function of at least the univocal serial number of the component occupying the position ${S}_{k + 1}^{j}$ and the hash value ${H}_{k}^{j}$ calculated for the previous component in said chain;
- for each created chain *S^{j}*, storing (304), after each calculation of a hash value ${H}_{i}^{j}$*,* said hash value ${H}_{i}^{j}$ in the memory of at least one of the components of the chain;
- at a time T after calculation and registration, for each of said chains *S^{j}*, of all hash values ${H}_{i}^{j}$*,* proceeding, for each of said chains, to a recalculation (305) of hash values, wherein said recalculation comprises:
- using said hash function for successively calculating a hash value ${H}_{i}^{j} ′$ for each of the components of the chain *S^{j}*, said calculation starting with the calculation of a hash value ${H}_{1}^{j} ′$ for the first component of the chain *S^{j}* and ending with the calculation of a hash value ${H}_{K}^{j} ′$ for the last component of said chain *S^{j},* wherein the hash value ${H}_{1}^{j} ′$ is calculated in function of at least the univocal serial number of said first component, wherein each hash value ${H}_{k + 1}^{j} ′$*,* for k= 1,...,K-1, is successively calculated in function of at least the univocal serial number of the component occupying the position ${S}_{k + 1}^{j}$ and the hash value ${H}_{k}^{j}$*,* calculated for the component occupying the position ${S}_{k}^{j}$, and
- comparing (306), after each calculation of a hash value ${H}_{i}^{j} ′$*,* the latter to the stored hash value ${H}_{i}^{j}$*,* and automatically putting (307) said component occupying the position ${S}_{i}^{j}$ in an anti-theft state in case of a difference between the stored hash value ${H}_{i}^{j}$ and the newly calculated hash value ${H}_{i}^{j} ′$*.*

2. Method according to claim 1, wherein, if M>1, then ${S}_{1}^{j} \neq {S}_{1}^{p}$ and ${S}_{K}^{j} \neq {S}_{K}^{p} ∀ j$*, p* ∈ {1, ... , *M*} with p ≠ j and M being the number of created chains, i.e. the first, and respectively last, component of one of the created chains *S^{j}* is different from the first, and respectively last, component of another of said created chains whichever created chains are considered.

3. Method according to claim 1 or 2, wherein the hash value ${H}_{i}^{j}$ is calculated by the CPU of the component occupying the position ${S}_{i}^{j}$ and/or by the CPU of a or each directly neighboring component of the component occupying said position ${S}_{i}^{j}$ in said chain and/or by the CPUs of all other components of said chain.

4. Method according to one of the claims 1 to 3, wherein said hash value ${H}_{i}^{j}$ is stored in the memory of the component occupying the position ${S}_{i}^{j}$ and/or in the memory of a or each directly neighboring component of the component occupying the position ${S}_{i}^{j}$ in said chain and/or in the memory of all other components of said chain.

5. Method according to one of the claims 1 to 4, comprising, in case of a divergence between the stored hash value ${H}_{i}^{j}$ and the newly calculated hash value ${H}_{i}^{j} ′$*,* automatically putting said component occupying the position ${S}_{i}^{j}$ and all next components of the chain or all other components of the chain in their respective anti-theft state.

6. Method according to one of the claims 1 to 4, comprising, in case of a divergence between the stored hash value ${H}_{i}^{j}$ and the newly calculated hash value ${H}_{i}^{j} ′$*,* automatically putting said component occupying the position ${S}_{i}^{j}$ in its anti-theft state, interrupting said recalculation, and putting all next components of the chain or all other components of the chain in said anti-theft state.

7. Method according to one of the claims 1 to 6, wherein a single chain comprising K = 2N components is created, each of the N components occupying two positions within said chain, two hash values being therefore calculated and stored for each component.

8. Method according to one of the claims 1 to 6, wherein two chains *S*¹ and *S*² comprising each K = N components are created, each component occupying two positions, a first position within the chain *S*¹ and a second position within the chain *S*²*,* two hash values being therefore calculated and stored for each component.

9. Method according to one of the claims 1 to 6, wherein a single chain comprising K = N+1 components is created, wherein the component of the chain occupying the first position within said chain also the last position of said chain.

10. Machine (100) comprising:
- N components (101-106), N ≥ 2, wherein each component comprises a central processing unit (CPU), a memory, and is assigned a univocal serial number;
wherein said N components (101-106) are arranged successively one after another from a first component ${S}_{1}^{j}$ to a last component ${S}_{K}^{j}$ in order to form at least one chain *S^{j}* of components, wherein each component is configured for occupying a position ${S}_{i}^{j}$ within said chain;
wherein said components (101-106) are interconnected for exchanging data;
wherein the CPU of each component is configured for using a hash function for calculating one or several hash values ${H}_{i}^{j}$;
wherein, for each chain *S^{j}*, the hash values ${H}_{i}^{j}$ are successively calculated for each component of the considered chain, starting with the calculation of a hash value ${H}_{1}^{j}$ for the first component of the chain and ending with the calculation of a hash value ${H}_{K}^{j}$ for the last component of said chain, wherein the hash value ${H}_{1}^{j}$ is calculated in function of at least the univocal serial number of said first component, wherein each hash value ${H}_{k + 1}^{j}$*,* for k= 1,...,K-1, is successively calculated in function of at least the univocal serial number of the component occupying the position ${S}_{k + 1}^{j}$ and the hash value ${H}_{k}^{j}$ calculated for the previous component in said chain;
wherein, for each chain *S^{j}*, the CPU having calculated a hash value ${H}_{i}^{j}$ is configured for storing the latter in the memory of at least one of the components (101-106) of the chain;
wherein, at a time T after calculation and registration, for each of the chain *S^{j}*, of all hash values ${H}_{i}^{j}$*,* at least one CPU of said components (101-106) is configured for launching an automatic recalculation of hash values for each of said chains, wherein said hash function is used for successively calculating a hash value ${H}_{i}^{j} ′$*,* i=1,...,K, for each of the components of the chain *S^{j}*, said calculation starting with the calculation of a hash value ${H}_{1}^{j} ′$ for the first component of the chain *S^{j}* and ending with the calculation of a hash value ${H}_{K}^{j} ′$ for the last component of said chain *S^{j}*, wherein the hash value ${H}_{1}^{j} ′$ is calculated in function of at least the univocal serial number of said first component, wherein each hash value ${H}_{k + 1}^{j} ′$ is successively calculated in function of at least the univocal serial number of the component occupying the position ${S}_{k + 1}^{j}$ and the hash value ${H}_{k}^{j} ′$ calculated for the component occupying the position ${S}_{k}^{j}$ in said chain, and wherein, after each calculation of a hash value ${H}_{i}^{j} ′$*,* at least one CPU is further configured for comparing said hash value ${H}_{i}^{j} ′$ to the stored hash value ${H}_{i}^{j}$*,* and for automatically putting the component occupying the position ${S}_{i}^{j}$ in an anti-theft state in case of a difference between the stored hash value ${H}_{i}^{j}$ and the newly calculated hash value ${H}_{i}^{j} ′$.

11. Machine (100) according to claim 10, configured for automatically starting the recalculation of the hash values at each of its starts and/or at each start of one of its components and/or periodically according to a predefined period of time.

12. Machine (100) according to claim 10 or 11, wherein the CPU of the component occupying the position ${S}_{i}^{j}$ and/or the CPU of a or each directly neighboring component of the component occupying said position ${S}_{i}^{j}$ in said chain *S^{j}* and/or the CPUs of all other components of said chain, is or are configured for calculating the hash value ${H}_{i}^{j}$. .

13. Machine (100) according to one of the claims 10 to 12, wherein, for each chain *S^{j}*, the CPU having calculated the hash value ${H}_{i}^{j}$ is configured for storing the latter in the memory of the component occupying the position ${S}_{i}^{j}$ and/or in the memory of a or each directly neighboring component of the component occupying the position ${S}_{i}^{j}$ and/or in the memory of all other components of said chain.

14. Machine (100) according to one of the claims 10-13, wherein said at least one CPU configured for comparing the hash value ${H}_{i}^{j} ′$ to the stored hash value ${H}_{i}^{j}$*,* and for automatically putting the component occupying the position ${S}_{i}^{j}$ in its anti-theft state in case of said difference between the stored hash value ${H}_{i}^{j}$ and the newly calculated hash value ${H}_{i}^{j} ′$ is further configured for putting all next components of the chain or all other components of the chain in their respective anti-theft state in case of said difference.

15. Machine (100) according to one of the claims 10-14, wherein said at least one CPU configured for comparing the hash value ${H}_{i}^{j} ′$ to the stored hash value ${H}_{i}^{j}$ is further configured for interrupting said recalculation in case of said difference between the stored hash value ${H}_{i}^{j}$ and the newly calculated hash value ${H}_{i}^{j} ′$*.*

## Patentansprüche

1. Verfahren zum Sichern einer Maschine (100) gegen Diebstahl, die N Komponenten (101-106) umfasst, N ≥ 2, wobei jede Komponente eine zentrale Verarbeitungseinheit - nachstehend CPU - und einen Speicher umfasst, wobei die Komponenten zum Datenaustausch miteinander verbunden sind, wobei das Verfahren Folgendes umfasst:
- Zuweisen (301) einer eindeutigen Seriennummer an jede Komponente;
- aus den N Komponenten, Erstellen (302) mindestens einer Kette *S^{j}* von Komponenten, die die N Komponenten (101-106) umfasst, wobei die Komponenten sukzessive nacheinander von einer ersten Komponente ${S}_{1}^{j}$ bis zu einer letzten Komponente ${S}_{K}^{j}$ angeordnet sind und jeweils eine Position ${S}_{i}^{j}$ innerhalb der Kette einnehmen;
- für jede erstellte Kette *S^{j}*, Verwenden (303) einer Hashfunktion zum sukzessiven Berechnen eines Hashwerts ${H}_{i}^{j}$, i=1,...,K, für jede Komponente ${S}_{i}^{j}$ der Kette, wobei die Berechnung mit der Berechnung eines Hashwerts ${H}_{1}^{j}$ für die erste Komponente der Kette beginnt und mit der Berechnung eines Hashwerts ${H}_{K}^{j}$ für die letzte Komponente der Kette endet, wobei der Hashwert ${H}_{1}^{j}$ in Abhängigkeit von mindestens der eindeutigen Seriennummer der ersten Komponente berechnet wird, und wobei jeder Hashwert ${H}_{k + 1}^{j}$, für k= 1,...,K-1, sukzessive in Abhängigkeit von mindestens der eindeutigen Seriennummer der Komponente, die die Position ${S}_{k + 1}^{j}$ einnimmt, und dem Hashwert ${H}_{k}^{j}$, der für die vorherige Komponente in der Kette berechnet wurde, berechnet wird;
- für jede erstellte Kette *S^{j}*, Speichern (304), nach jeder Berechnung eines Hashwerts ${H}_{i}^{j}$, des Hashwerts ${H}_{i}^{j}$ im Speicher mindestens einer von den Komponenten der Kette;
- zu einem Zeitpunkt T nach Berechnung und Registrierung, für jede der Ketten *S^{j}*, aller Hashwerte ${H}_{i}^{j}$, Übergehen, für jede der Ketten, zu einer Neuberechnung (305) von Hashwerten, wobei die Neuberechnung Folgendes umfasst:
- Verwenden der Hashfunktion zum sukzessiven Berechnen eines Hashwerts ${H}_{i}^{j} ′$ für jede der Komponenten der Kette *S^{j}*, wobei die Berechnung mit der Berechnung eines Hashwerts ${H}_{1}^{j} ′$ für die erste Komponente der Kette *S^{j}* beginnt und mit der Berechnung eines Hashwerts ${H}_{K}^{j} ′$ für die letzte Komponente der Kette *S^{j}* endet, wobei der Hashwert ${H}_{1}^{j} ′$ in Abhängigkeit von mindestens der eindeutigen Seriennummer der ersten Komponente berechnet wird, wobei jeder Hashwert ${H}_{k + 1}^{j} ′$*,* für k= 1,...,K-1, sukzessive in Abhängigkeit von mindestens der eindeutigen Seriennummer der Komponente, die die Position ${S}_{k + 1}^{j}$ einnimmt, und dem Hashwert ${H}_{k}^{j} ′$*,* der für die Komponente, die die Position ${S}_{k}^{j}$ einnimmt, berechnet wurde, berechnet wird, und
- Vergleichen (306), nach jeder Berechnung eines Hashwerts ${H}_{i}^{j} ′$, des Letzteren mit dem gespeicherten Hashwert ${H}_{i}^{j}$, und automatisches Versetzen (307) der Komponente, die die Position ${S}_{i}^{j}$ einnimmt, in einen Diebstahlschutzzustand im Falle einer Differenz zwischen dem gespeicherten Hashwert ${H}_{i}^{j}$ und dem neu berechneten Hashwert ${H}_{i}^{j} ′$.

2. Verfahren nach Anspruch 1, wobei, falls M>1, dann ${S}_{1}^{j} \neq {S}_{1}^{p}$ und ${S}_{K}^{j} \neq {S}_{K}^{p} ∀ j$, *p* ∈ {1, ..., M} mit p ≠ j gilt und M die Anzahl der erstellten Ketten ist, d. h. die erste beziehungsweise letzte Komponente einer von den erstellten Ketten *S^{j}* ist von der ersten beziehungsweise letzten Komponente einer anderen von den erstellten Ketten verschieden, unabhängig davon, welche erstellten Ketten betrachtet werden.

3. Verfahren nach Anspruch 1 oder 2, wobei der Hashwert ${H}_{i}^{j}$ von der CPU der Komponente, die die Position ${S}_{i}^{j}$ einnimmt, und/oder von der CPU einer oder jeder direkt benachbarten Komponente der Komponente, die die Position ${S}_{i}^{j}$ in der Kette einnimmt, und/oder von den CPUs aller anderen Komponenten der Kette berechnet wird.

4. Verfahren nach einem der Ansprüche 1 bis 3, wobei der Hashwert ${H}_{i}^{j}$ im Speicher der Komponente, die die Position ${S}_{i}^{j}$ einnimmt, und/oder im Speicher einer oder jeder direkt benachbarten Komponente der Komponente, die die Position ${S}_{i}^{j}$ in der Kette einnimmt, und/oder im Speicher aller anderen Komponenten der Kette gespeichert wird.

5. Verfahren nach einem der Ansprüche 1 bis 4, umfassend, im Falle einer Abweichung zwischen dem gespeicherten Hashwert ${H}_{i}^{j}$ und dem neu berechneten Hashwert ${H}_{i}^{j} ′$, automatisches Versetzen der Komponente, die die Position ${S}_{i}^{j}$ einnimmt, und aller nachfolgenden Komponenten der Kette oder aller anderen Komponenten der Kette in ihren jeweiligen Diebstahlschutzzustand.

6. Verfahren nach einem der Ansprüche 1 bis 4, umfassend, im Falle einer Abweichung zwischen dem gespeicherten Hashwert ${H}_{i}^{j}$ und dem neu berechneten Hashwert ${H}_{i}^{j} ′$, automatisches Versetzen der Komponente, die die Position ${S}_{i}^{j}$ einnimmt, in ihren Diebstahlschutzzustand, Unterbrechen der Neuberechnung und Versetzen aller nachfolgenden Komponenten der Kette oder aller anderen Komponenten der Kette in den Diebstahlschutzzustand.

7. Verfahren nach einem der Ansprüche 1 bis 6, wobei eine einzelne Kette, die K = 2N Komponenten umfasst, erstellt wird, wobei jede der N Komponenten zwei Positionen innerhalb der Kette einnimmt und daher für jede Komponente zwei Hashwerte berechnet und gespeichert werden.

8. Verfahren nach einem der Ansprüche 1 bis 6, wobei zwei Ketten *S*¹ und *S*², die jeweils K = N Komponenten umfassen, erstellt werden, wobei jede Komponente zwei Positionen einnimmt, eine erste Position innerhalb der Kette *S*¹ und eine zweite Position innerhalb der Kette *S*², und daher für jede Komponente zwei Hashwerte berechnet und gespeichert werden.

9. Verfahren nach einem der Ansprüche 1 bis 6, wobei eine einzelne Kette, die K = N+1 Komponenten umfasst, erstellt wird, wobei die Komponente der Kette, die die erste Position innerhalb der Kette einnimmt, auch die letzte Position der Kette einnimmt.

10. Maschine (100), umfassend:
- N Komponenten (101-106), N ≥ 2, wobei jede Komponente eine zentrale Verarbeitungseinheit (CPU) und einen Speicher umfasst und ihr eine eindeutige Seriennummer zugewiesen ist;
wobei die N Komponenten (101-106) sukzessive nacheinander von einer ersten Komponente ${S}_{1}^{j}$ bis zu einer letzten Komponente ${S}_{K}^{j}$ angeordnet sind, um mindestens eine Kette *S^{j}* von Komponenten auszubilden, wobei jede Komponente konfiguriert ist, um eine Position ${S}_{i}^{j}$ innerhalb der Kette einzunehmen;
wobei die Komponenten (101-106) zum Datenaustausch miteinander verbunden sind;
wobei die CPU jeder Komponente konfiguriert ist, um eine Hashfunktion zum Berechnen eines oder mehrerer Hashwerte ${H}_{i}^{j}$ zu verwenden;
wobei für jede Kette *S^{j}* die Hashwerte ${H}_{i}^{j}$ sukzessive für jede Komponente der betrachteten Kette berechnet werden, beginnend mit der Berechnung eines Hashwerts ${H}_{1}^{j}$ für die erste Komponente der Kette und endend mit der Berechnung eines Hashwerts ${H}_{K}^{j}$ für die letzte Komponente der Kette, wobei der Hashwert ${H}_{1}^{j}$ in Abhängigkeit von mindestens der eindeutigen Seriennummer der ersten Komponente berechnet wird, wobei jeder Hashwert ${H}_{k + 1}^{j}$, für k= 1,...,K-1, sukzessive in Abhängigkeit von mindestens der eindeutigen Seriennummer der Komponente, die die Position ${S}_{k + 1}^{j}$ einnimmt, und dem Hashwert ${H}_{k}^{j}$, der für die vorherige Komponente in der Kette berechnet wurde, berechnet wird;
wobei für jede Kette *S^{j}* die CPU, die einen Hashwert ${H}_{i}^{j}$ berechnet hat, konfiguriert ist, um Letzteren im Speicher mindestens einer von den Komponenten (101-106) der Kette zu speichern;
wobei zu einem Zeitpunkt T nach Berechnung und Registrierung, für jede der Ketten *S^{j}*, aller Hashwerte ${H}_{i}^{j}$ mindestens eine CPU der Komponenten (101-106) konfiguriert ist, um eine automatische Neuberechnung von Hashwerten für jede der Ketten einzuleiten, wobei die Hashfunktion zum sukzessiven Berechnen eines Hashwerts ${H}_{i}^{j} ′$, i=1,...,K, für jede der Komponenten der Kette *S^{j}* verwendet wird, wobei die Berechnung mit der Berechnung eines Hashwerts ${H}_{1}^{j} ′$ für die erste Komponente der Kette *S^{j}* beginnt und mit der Berechnung eines Hashwerts ${H}_{K}^{j} ′$ für die letzte Komponente der Kette *S^{j}* endet, wobei der Hashwert ${H}_{1}^{j} ′$ in Abhängigkeit von mindestens der eindeutigen Seriennummer der ersten Komponente berechnet wird, wobei jeder Hashwert ${H}_{k + 1}^{j} ′$ sukzessive in Abhängigkeit von mindestens der eindeutigen Seriennummer der Komponente, die die Position ${S}_{k + 1}^{j}$ einnimmt, und dem Hashwert ${H}_{k}^{j} ′$, der für die Komponente, die die Position ${S}_{k}^{j}$ in der Kette einnimmt, berechnet wurde, berechnet wird, und wobei nach jeder Berechnung eines Hashwerts ${H}_{i}^{j} ′$ mindestens eine CPU ferner konfiguriert ist, um den Hashwert ${H}_{i}^{j} ′$ mit dem gespeicherten Hashwert ${H}_{i}^{j}$ zu vergleichen und um die Komponente, die die Position ${S}_{i}^{j}$ einnimmt, im Falle einer Differenz zwischen dem gespeicherten Hashwert ${H}_{i}^{j}$ und dem neu berechneten Hashwert ${H}_{i}^{j} ′$ automatisch in einen Diebstahlschutzzustand zu versetzen.

11. Maschine (100) nach Anspruch 10, konfiguriert, um die Neuberechnung der Hashwerte bei jedem ihrer Starts und/oder bei jedem Start einer von ihren Komponenten und/oder periodisch gemäß einem vordefinierten Zeitraum automatisch zu starten.

12. Maschine (100) nach Anspruch 10 oder 11, wobei die CPU der Komponente, die die Position ${S}_{i}^{j}$ einnimmt, und/oder die CPU einer oder jeder direkt benachbarten Komponente der Komponente, die die Position ${S}_{i}^{j}$ in der Kette *S^{j}* einnimmt, und/oder die CPUs aller anderen Komponenten der Kette konfiguriert ist oder sind, um den Hashwert ${H}_{i}^{j}$ zu berechnen.

13. Maschine (100) nach einem der Ansprüche 10 bis 12, wobei für jede Kette *S^{j}* die CPU, die den Hashwert ${H}_{i}^{j}$ berechnet hat, konfiguriert ist, um Letzteren im Speicher der Komponente, die die Position ${S}_{i}^{j}$ einnimmt, und/oder im Speicher einer oder jeder direkt benachbarten Komponente der Komponente, die die Position ${S}_{i}^{j}$ einnimmt, und/oder im Speicher aller anderen Komponenten der Kette zu speichern.

14. Maschine (100) nach einem der Ansprüche 10 bis 13, wobei die mindestens eine CPU, die konfiguriert ist, um den Hashwert ${H}_{i}^{j} ′$ mit dem gespeicherten Hashwert ${H}_{i}^{j}$ zu vergleichen und um die Komponente, die die Position ${S}_{i}^{j}$ einnimmt, im Falle der Differenz zwischen dem gespeicherten Hashwert ${H}_{i}^{j}$ und dem neu berechneten Hashwert ${H}_{i}^{j} ′$ automatisch in ihren Diebstahlschutzzustand zu versetzen, ferner konfiguriert ist, um alle nachfolgenden Komponenten der Kette oder alle anderen Komponenten der Kette im Falle der Differenz in ihren jeweiligen Diebstahlschutzzustand zu versetzen.

15. Maschine (100) nach einem der Ansprüche 10 bis 14, wobei die mindestens eine CPU, die konfiguriert ist, um den Hashwert ${H}_{i}^{j} ′$ mit dem gespeicherten Hashwert ${H}_{i}^{j}$ zu vergleichen, ferner konfiguriert ist, um die Neuberechnung im Falle der Differenz zwischen dem gespeicherten Hashwert ${H}_{i}^{j}$ und dem neu berechneten Hashwert ${H}_{i}^{j} ′$ zu unterbrechen.

## Revendications

1. Procédé de sécurisation contre le vol d'une machine (100) comprenant N composants (101-106), avec N ≥ 2, dans lequel chaque composant comprend une unité centrale de traitement -ci-après CPU - et une mémoire, dans lequel lesdits composants sont interconnectés pour échanger des données, ledit procédé comprenant :
- attribuer (301) à chaque composant un numéro de série univoque ;
- à partir desdits N composants, créer (302) au moins une chaîne *S^{j}* de composants comprenant lesdits N composants (101-106), dans lequel lesdits composants sont agencés successivement les uns après les autres, d'un premier composant ${S}_{1}^{j}$ à un dernier composant ${S}_{K}^{j}$, occupant chacun une position ${S}_{i}^{j}$ dans ladite chaîne ;
- pour chaque chaîne *S^{j}* créée, utiliser (303) une fonction de hachage pour calculer successivement une valeur de hachage ${H}_{i}^{j}$, i=1, ..., K, pour chaque composant ${S}_{i}^{j}$ de la chaîne, ledit calcul commençant par le calcul d'une valeur de hachage ${H}_{1}^{j}$ pour le premier composant de la chaîne et se terminant par le calcul d'une valeur de hachage ${H}_{K}^{j}$ pour le dernier composant de ladite chaîne, dans lequel la valeur de hachage ${H}_{1}^{j}$ est calculée en fonction d'au moins le numéro de série univoque dudit premier composant, et dans lequel chaque valeur de hachage ${H}_{k + 1}^{j}$, pour k = 1, ..., K-1, est calculée successivement en fonction d'au moins le numéro de série univoque du composant occupant la position ${S}_{k + 1}^{j}$ et de la valeur de hachage ${H}_{k}^{j}$ calculée pour le composant précédent dans ladite chaîne ;
- pour chaque chaîne *S^{j}* créée, stocker (304), après chaque calcul d'une valeur de hachage ${H}_{i}^{j}$, ladite valeur de hachage ${H}_{i}^{j}$ dans la mémoire d'au moins l'un des composants de la chaîne ;
- à un instant T après le calcul et l'enregistrement, pour chacune desdites chaînes *S^{j}*, de toutes les valeurs de hachage ${H}_{i}^{j}$*,* procéder, pour chacune desdites chaînes, à un recalcul (305) de valeurs de hachage, dans lequel ledit recalcul comprend :
- l'utilisation de ladite fonction de hachage pour calculer successivement une valeur de hachage ${H}_{i}^{j} ′$ pour chacun des composants de la chaîne *S^{j}*, ledit calcul commençant par le calcul d'une valeur de hachage ${H}_{1}^{j} ′$ pour le premier composant de la chaîne *S^{j}* et se terminant par le calcul d'une valeur de hachage ${H}_{K}^{j} ′$ pour le dernier composant de ladite chaîne *S^{j},* dans lequel la valeur de hachage ${H}_{1}^{j} ′$ est calculée en fonction d'au moins le numéro de série univoque dudit premier composant, dans lequel chaque valeur de hachage ${H}_{k + 1}^{j} ′$, pour k = 1, ..., K-1, est calculée successivement en fonction d'au moins le numéro de série univoque du composant occupant la position ${S}_{k + 1}^{j}$ et la valeur de hachage ${H}_{k}^{j} ′$ calculée pour le composant occupant la position ${S}_{k}^{j}$, et
- la comparaison (306), après chaque calcul d'une valeur de hachage ${H}_{i}^{j} ′$, de cette dernière avec la valeur de hachage stockée ${H}_{i}^{j}$*,* et la mise automatique (307) dudit composant occupant la position ${S}_{i}^{j}$ dans un état antivol en cas de différence entre la valeur de hachage stockée ${H}_{i}^{j}$ et la valeur de hachage nouvellement calculée ${H}_{i}^{j} ′$.

2. Procédé selon la revendication 1, dans lequel, si M > 1, alors ${S}_{1}^{j} \neq {S}_{1}^{p}$ et ${S}_{K}^{j} \neq {S}_{K}^{p} ∀ j$,*p* ∈ {1, ... , M} avec *p ≠ j,* et M étant le nombre de chaînes créées, c'est-à-dire que le premier, et respectivement le dernier, composant de l'une des chaînes créées *S^{j}* est différent du premier, et respectivement du dernier, composant d'une autre chaîne desdites chaînes créées, quelles que soient les chaînes créées considérées.

3. Procédé selon la revendication 1 ou 2, dans lequel la valeur de hachage ${H}_{i}^{j}$ est calculée par le CPU du composant occupant la position ${S}_{i}^{j}$ et/ou par le CPU d'un ou de chaque composant directement voisin du composant occupant ladite position ${S}_{i}^{j}$ dans ladite chaîne et/ou par les CPU de tous les autres composants de ladite chaîne.

4. Procédé selon l'une des revendications 1 à 3, dans lequel ladite valeur de hachage ${H}_{i}^{j}$ est stockée dans la mémoire du composant occupant la position ${S}_{i}^{j}$ et/ou dans la mémoire d'un ou de chaque composant directement voisin du composant occupant la position ${S}_{i}^{j}$ dans ladite chaîne et/ou dans la mémoire de tous les autres composants de ladite chaîne.

5. Procédé selon l'une des revendications 1 à 4, comprenant, en cas de divergence entre la valeur de hachage stockée ${H}_{i}^{j}$ et la valeur de hachage nouvellement calculée ${H}_{K}^{j} ′$, la mise automatique dudit composant occupant la position ${S}_{i}^{j}$ et de tous les composants suivants de la chaîne ou de tous les autres composants de la chaîne dans leur état antivol respectif.

6. Procédé selon l'une des revendications 1 à 4, comprenant, en cas de divergence entre la valeur de hachage stockée ${H}_{i}^{j}$ et la valeur de hachage nouvellement calculée ${H}_{i}^{j} ′$, la mise automatique dudit composant occupant la position ${S}_{i}^{j}$ dans son état antivol, l'interruption dudit recalcul et la mise de tous les composants suivants de la chaîne ou de tous les autres composants de la chaîne dans ledit état antivol.

7. Procédé selon l'une des revendications 1 à 6, dans lequel une chaîne unique comprenant K = 2N composants est créée, chacun des N composants occupant deux positions dans ladite chaîne, deux valeurs de hachage étant par conséquent calculées et stockées pour chaque composant.

8. Procédé selon l'une des revendications 1 à 6, dans lequel deux chaînes *S*¹ et *S*² comprenant chacune K = N composants sont créées, chaque composant occupant deux positions, une première position dans la chaîne *S*¹ et une seconde position dans la chaîne *S*², deux valeurs de hachage étant par conséquent calculées et stockées pour chaque composant.

9. Procédé selon l'une des revendications 1 à 6, dans lequel une chaîne unique comprenant K = N+1 composants est créée, dans lequel le composant de la chaîne occupant la première position dans ladite chaîne également la dernière position de ladite chaîne.

10. Machine (100) comprenant :
- N composants (101-106), N ≥ 2, dans laquelle chaque composant comprend une unité centrale de traitement (CPU) et une mémoire, et un numéro de série univoque lui est attribué ;
dans laquelle lesdits N composants (101-106) sont agencés successivement les uns après les autres, d'un premier composant ${S}_{1}^{j}$ à un dernier composant ${S}_{K}^{j}$, afin de former au moins une chaîne *S^{j}* de composants, dans laquelle chaque composant est configuré pour occuper une position ${S}_{i}^{j}$ dans ladite chaîne ;
dans laquelle lesdits composants (101-106) sont interconnectés pour échanger des données ;
dans laquelle le CPU de chaque composant est configuré pour utiliser une fonction de hachage afin de calculer une ou plusieurs valeurs de hachage ${H}_{i}^{j}$;
dans laquelle, pour chaque chaîne *S^{j}*, les valeurs de hachage ${H}_{i}^{j}$ sont calculées successivement pour chaque composant de la chaîne considérée, en commençant par le calcul d'une valeur de hachage ${H}_{1}^{j}$ pour le premier composant de la chaîne et en terminant par le calcul d'une valeur de hachage ${H}_{K}^{j}$ pour le dernier composant de ladite chaîne, dans laquelle la valeur de hachage ${H}_{1}^{j}$ est calculée en fonction d'au moins le numéro de série univoque dudit premier composant, dans laquelle chaque valeur de hachage ${H}_{k + 1}^{j}$, pour k = 1, ..., K-1, est calculée successivement en fonction d'au moins le numéro de série univoque du composant occupant la position ${S}_{k + 1}^{j}$ et de la valeur de hachage ${H}_{k}^{j}$ calculée pour le composant précédent dans ladite chaîne ;
dans laquelle, pour chaque chaîne *S^{j}*, le CPU ayant calculé une valeur de hachage ${H}_{i}^{j}$ est configuré pour stocker cette dernière dans la mémoire d'au moins l'un des composants (101-106) de la chaîne ;
dans laquelle, à un instant T après le calcul et l'enregistrement, pour chacune des chaînes *S^{j}*, de toutes les valeurs de hachage ${H}_{i}^{j}$, au moins un CPU desdits composants (101-106) est configuré pour lancer un recalcul automatique de valeurs de hachage pour chacune desdites chaînes,
dans laquelle ladite fonction de hachage est utilisée pour calculer successivement une valeur de hachage ${H}_{i}^{j} ′$, i = 1, ..., K, pour chacun des composants de la chaîne *S^{j}*, ledit calcul commençant par le calcul d'une valeur de hachage ${H}_{1}^{j} ′$ pour le premier composant de la chaîne *S^{j}* et se terminant par le calcul d'une valeur de hachage ${H}_{K}^{j} ′$ pour le dernier composant de ladite chaîne *S^{j}*, dans laquelle la valeur de hachage ${H}_{1}^{j} ′$ est calculée en fonction d'au moins le numéro de série univoque dudit premier composant,
dans laquelle chaque valeur de hachage ${H}_{k + 1}^{j} ′$ est calculée successivement en fonction d'au moins le numéro de série univoque du composant occupant la position ${S}_{k + 1}^{j}$ et de la valeur de hachage ${H}_{k}^{j} ′$ calculée pour le composant occupant la position ${S}_{k}^{j}$ dans ladite chaîne, et
dans laquelle, après chaque calcul d'une valeur de hachage ${H}_{i}^{j} ′$, au moins un CPU est en outre configuré pour comparer ladite valeur de hachage ${H}_{i}^{j} ′$ à la valeur de hachage stockée ${H}_{i}^{j}$, et pour mettre automatiquement le composant occupant la position ${S}_{i}^{j}$ dans un état antivol en cas de différence entre la valeur de hachage stockée ${H}_{i}^{j}$ et la valeur de hachage nouvellement calculée ${H}_{i}^{j} ′$.

11. Machine (100) selon la revendication 10, configurée pour démarrer automatiquement le recalcul des valeurs de hachage à chacun de ses démarrages et/ou à chaque démarrage de l'un de ses composants et/ou périodiquement selon une période de temps prédéfinie.

12. Machine (100) selon la revendication 10 ou 11, dans laquelle le CPU du composant occupant la position ${S}_{i}^{j}$ et/ou le CPU d'un ou de chaque composant directement voisin du composant occupant ladite position ${S}_{i}^{j}$ dans ladite chaîne *S^{j}* et/ou les CPUs de tous les autres composants de ladite chaîne, est ou sont configurée(s) pour calculer la valeur de hachage ${H}_{i}^{j}$.

13. Machine (100) selon l'une des revendications 10 à 12, dans laquelle, pour chaque chaîne *S^{j}*, le CPU ayant calculé la valeur de hachage ${H}_{i}^{j}$ est configuré pour stocker cette dernière dans la mémoire du composant occupant la position ${S}_{i}^{j}$ et/ou dans la mémoire d'un ou de chaque composant directement voisin du composant occupant la position ${S}_{i}^{j}$ et/ou dans la mémoire de tous les autres composants de ladite chaîne.

14. Machine (100) selon l'une des revendications 10 à 13, dans laquelle ledit au moins un CPU configuré pour comparer la valeur de hachage ${H}_{i}^{j} ′$ à la valeur de hachage stockée ${H}_{i}^{j}$, et pour mettre automatiquement le composant occupant la position ${S}_{i}^{j}$ dans son état antivol en cas de ladite différence entre la valeur de hachage stockée ${H}_{i}^{j}$ et la valeur de hachage nouvellement calculée ${H}_{i}^{j} ′$, est en outre configuré pour mettre tous les composants suivants de la chaîne ou tous les autres composants de la chaîne dans leur état antivol respectif en cas de ladite différence.

15. Machine (100) selon l'une des revendications 10 à 14, dans laquelle ledit au moins un CPU configuré pour comparer la valeur de hachage ${H}_{i}^{j} ′$ à la valeur de hachage stockée ${H}_{i}^{j}$ est en outre configurée pour interrompre ledit recalcul en cas de ladite différence entre la valeur de hachage stockée ${H}_{i}^{j}$ et la valeur de hachage nouvellement calculée ${H}_{i}^{j} ′$.
